**Europäisches Patentamt**

**European Patent Office**

**Office européen des brevets**

(19)

(11) Publication number: **0 119 771**

**B1**

(12) EUROPEAN PATENT SPECIFICATION

(45) Date of publication of patent specification: **03.08.88**

(51) Int. Cl.⁴: $C\ 08\ F\ 6/00$, $C\ 08\ L\ 33/20$

(21) Application number: **84301266.7**

(22) Date of filing: **27.02.84**

(54) Process for reducing the residual acrylonitrile monomer content of acrylonitrile copolymer resins.

(30) Priority: **14.03.83 US 475010**

(43) Date of publication of application:
**26.09.84 Bulletin 84/39**

(45) Publication of the grant of the patent:
**03.08.88 Bulletin 88/31**

(84) Designated Contracting States:
**DE FR GB IT NL**

(56) References cited:
**LU-A- 45 622**
**US-A-2 735 834**
**US-A-4 196 111**
**US-A-4 251 412**

(73) Proprietor: **BORG-WARNER CHEMICALS INC.**
**International Center**
**Parkersburg West Virginia 26101 (US)**

(72) Inventor: **Cunningham, Mark Alan**
**512 B 9th Avenue**
**Parkersburg West Virginia (US)**
Inventor: **Wozny, Mary Ellen**
**P.O. Box 112**
**Coolville Ohio (US)**

(74) Representative: **Myerscough, Philip Boyd et al**
**J.A.Kemp & Co. 14, South Square Gray's Inn**
**London, WC1R 5EU (GB)**

Courier Press, Leamington Spa, England.

## Description

This invention relates to a process for reducing the residual acrylonitrile monomer dissolved in acrylonitrile copolymer resin, and more particularly to a process for scavenging residual acrylonitrile monomer from such resins during melt-processing.

Acrylonitrile is employed in the preparation of a wide variety of commercially important resins including for example nitrile rubbers, styrene-acrylonitrile copolymer resins, ABS graft copolymer thermoplastic molding resins and in numerous acrylonitrile-containing graft copolymer impact modifier resins. These copolymers are most often prepared by polymerization in aqueous systems using any of a variety of conventional emulsion and suspension polymerization processes. Even where the polymerization is substantially complete there remains an undesirable amount of unpolymerized acrylonitrile monomer both in the aqueous phase and in the polymer which is removed incompletely and with great difficulty and expense by physical processes such as stripping by steam or vacuum. The presence of residual acrylonitrile monomer in the copolymer is detrimental to the color stability of the resin and may restrict its use due to toxicological considerations and concomitant restrictions imposed by regulation.

Various methods for scavenging residual monomers from the polymer and the aqueous component separately and in combination have been developed in recent years. For example, in U.S. 4,278,582 there is disclosed a process for reducing residual acrylonitrile to levels below 100 ppm by treating the mixtures with ammonium or thio compounds or with a variety of inorganic salts. In U.S. 4,251,412 there is disclosed a method for treating acrylonitrile latices with at least a stoichiometric amount of an alkyl or alkanol amine to reduce the residual monomer content. Although these processes are effective, the remaining unreacted scavenger compound as well as its adducts with acrylonitrile remain in the aqueous phase. This in turn increases the level of non-aqueous volatiles (NAV) present in the aqueous phase and may well present further environmental problems.

A process for scavenging the residual acrylonitrile monomer from acrylonitrile copolymers during the melt-processing stage rather than in the latex would minimize the NAV level in resin without increasing the NAV level of the aqueous effluent and would thus be a useful advance in the art.

The present invention provides a process for reducing the acrylonitrile monomer content of an acrylonitrile copolymer resin which comprises adding to said resin, as aliphatic amine, at least one of ethanolamine, triethanolamine, 1,3-bis(aminomethyl)cyclohexane, diethylenetriamine, triethylenetetramine and tetraethylenepentamine and then melt-processing said resin. The melt-processing step may be one in a milling, melt mixing or extrusion compounding process.

The acrylonitrile copolymer resins useful in the present invention are obtained by polymerizing acrylonitrile alone, or more normally with other vinylidene comonomers to form copolymers, for example with about 50 weight percent or more of butadiene as in nitrile rubbers; up to about 50 weight percent acrylonitrile with about 50—95 weight percent styrene as in SAN resins; about 50—5 weight percent acrylonitrile with about 1—99 weight percent each of an alkyl acrylate such as methyl acrylate, ethyl acrylate, butyl acrylate, methyl methacrylate, styrene and butadiene as in the well-known ABS type graft copolymer resins and other copolymers.

Typically, the polymerizable comonomers in addition to butadiene, styrene and an alkyl acrylate or alkacrylate wherein the alkyl group contains 1 to 8 carbon atoms will be vinylidene monomers having at least one terminal $CH_2=C$ group. Polymerizable comonomers useful in the present invention include: other vinyl aromatics such as alpha-methylstyrene and chlorostyrene; alpha-olefins such as ethylene, propylene and isobutylene; vinyl halides such as vinyl chloride, vinyl bromide, vinyl fluoride, vinylidene chloride, and vinylidene fluoride; vinyl esters such as vinyl acetate; other alpha,beta-olefinically unsaturated nitriles such as methacrylonitrile; alkyl vinyl ethers such as methyl vinyl ether, isopropyl vinyl ethers; n-butyl vinyl ether, isopropyl vinyl ether, and haloalkyl vinyl ethers such as 2-chloroethyl vinyl ether; n-octyl methacrylate, dodecyl methacrylate, methyl ethacrylate, ethyl ethacrylate, haloalkyl acrylates such as chloropropyl acrylate, amino-acrylates and methacrylates vinyl ketones, vinyl pyridine, alpha,beta-olefinically unsaturated amides such as acrylamide, N-methyl acrylamide, N-t-butyl acrylamide, N-cyclohexyl acrylamide, diacetone acrylamide; methacrylamide, and N-ethyl methacrylamide; alpha,beta-olefinically unsaturated N-alkylol amides such as N-methylol acrylamide, N-ethylol acrylamide, N-propylol acrylamide, N-methylol methacrylamide, and N-ethylol methacrylamide; polyfunctional compounds such as methylene-bis-acrylamide, ethylene glycol dimethacrylate, diethylene glycol diacrylate, allyl pentaerythritol and divinyl benzene; alpha,beta-olefinically unsaturated carboxylic acid monomers containing from 3 to 10 carbon atoms such as acrylic acid, methacrylic acid, crotonic acid, beta-acryloxypropionic acid, hydrosorbic acid, sorbic acid, alpha-chlorosorbic acid, cinamic acid, beta-styrylacrylic acid, itaconic acid, citraconic acid, maleic acid, fumaric acid, mesaconic acid, glutaconic acid, aconitic acid. The preferred acid monomers are the alpha,beta-monoolefinically unsaturated monocarboxylic acids such as acrylic acid and methacrylic acid as are known to those skilled in the art. Mixtures of one or more of the above-mentioned monomers may be employed if desired. Generally, up to about 20% by weight of other polymerizable vinylidene comonomers may be employed.

The acrylonitrile copolymer resins may be prepared by any of a variety of conventional polymerization processes. For example, such resins may be prepared in latex form by a conventional emulsion process.

Such processes employ an emulsifier, which may be charged at the outset of the polymerization or may be added incrementally or by proportioning throughout the run. Any of the general types of anionic, cationic or nonionic emulsifiers may be employed, however, best results are generally obtained when anionic emulsifiers are used. Typical anionic emulsifiers which may be used include those types known to those skilled in the art, for example, as disclosed beginning on page 102 in J. Van Alphen's "Rubber Chemicals", Elsevier, 1956, for example, the alkali metal or ammonium salts of the sulfates of alcohols containing from 8 to 18 carbon atoms such as, for example, sodium lauryl sulfate; alkali metal and ammonium salts of sulfonated petroleum or paraffin oils; sodium salts of aromatic sulfonic acids, such as dodecane-1-sulfonic acid and octadiene-1-sulfonic acid; alkyl aryl sulfonates such as sodium isopropyl benzene sulfonate and sodium dodecyl benzene sulfonate; alkali metal and ammonium salts of sulfonated dicarboxylic acid esters such as sodium dioctyl sulfosuccinate and disodium N-octadecyl sulfo-succinamate; alkali metal or ammonium salts of the free acids of complex organic mono- and diphosphate esters. So called nonionic emulsifiers are for example octyl or nonylphenyl polyethoxyethanol. Useful as emulsifiers are the alkali metal salts of the aromatic sulfonic acids and the sodium salts of the aromatic sulfonic acids and the sodium salts of the alkyl aryl sulfonates. In addition to the above-mentioned emulsifiers it may be desirable and advantageous to add post-polymerization emulsifiers and stabilizers to the polymeric anionic latex binders in order to improve the latex stability if it is to be stored for prolonged periods prior to use. Such post-polymerization emulsifiers may be the same as, or different than, the emulsifier employed in conducting the polymerization but preferably are anionic or nonionic surface active agents.

To initiate the polymerization free radical catalysts are employed. The use of such catalysts, although in certain systems not absolutely essential, ensures a more uniform and controllable polymerization and a satisfactory polymerization rate. Commonly used free radical initiators include the various peroxygen compounds such as the persulfates, benzoyl peroxide, t-butyl hydroperoxide, cumene hydroperoxide; azo compounds such as azodiisobutyronitrile, and dimethyl azodiisobutyrate. Especially useful as polymerization initiators are the water-soluble peroxygen compounds such as hydrogen peroxide and the sodium, potassium and ammonium persulfates.

The alkali metal and ammonium persulfate catalysts may be employed by themselves or in activated redox systems. Typical redox systems include the persulfates in combination with: a reducing substance such as a polyhydroxy phenol and an oxidizable sulfur compound such as sodium sulfite or sodium bisulfite, a reducing sugar, a diazomercapto compound, a ferricyanide compound, dimethylaminopropionitrile. Heavy metal ions such as silver, cupric, iron, cobalt, nickel and others may also be used to activate persulfate catalyzed polymerizations. In general the amount of free radical initiator employed will range between about 0.1 to 5% based on the weight of the total monomers. The initiator is generally completely charged at the start of the polymerization, however, incremental addition or proportioning of the initiator throughout the polymerization is often desirable.

In conducting the polymerization for the emulsion of the resins of the present invention the monomers are typically changed into the polymerization reactor which contains the water and the emulsifying agent. The reactor and its contents are then heated and the polymerization initiator added. The temperature at which the polymerization is conducted is not critical and may range from 0°C and 80°C or higher. Excellent results, however, have been obtained when the polymerization temperature is maintained between 5°C and 70°C. Polymerization modifiers such as the primary, secondary, and tertiary mercaptans, buffers, electrolytes may also be included in the polymerization. The polymers are isolated from their latices by a variety of conventional methods including coagulation with acid or an aqueous electrolyte or by mixing with a coagulant such as an alcohol. The coagulated resin is then dried, and may be further processed by melt-mixing in such conventional equipment as a Banbury mixer, a heated mill or an extrusion compounder, and diced or pelletized. For the purposes of this invention, the dry resin may be treated with the scavenger compound as set forth herein below either as the dry powder obtained on coagulation and drying or after a melt-processing and pelletizing or dicing step. As is well known in the art, acrylonitrile copolymer resins may also be prepared by a variety of other methods including bulk, suspension and solution polymerization processes. The dry, powdered or pelletized resins produced by such processes may also be employed in the process of this invention to provide resins having a low residual acrylonitrile monomer content.

The preferred alkylamines, as aliphatic amines, are those having a high boiling point at atmospheric pressure, preferably greater than 150°C, in order to minimize loss through volatilization during melt processing.

The amount of amine employed will depend in part upon the level of residual acrylonitrile monomer present in the resin. In general the amount of amine used will be less than the stoichiometric (molar) equivalent of the amount of residual acrylonitrile monomer. The amine may be added to the acrylonitrile containing resin directly or by absorbing the amine on the surface of a small amount of solid resin and dispersing the mixture thoroughly throughout the bulk of the untreated resin. In general, the amount of amine scavenging compound used may be in the range of from .01 to 10 parts by weight of amine per hundred parts of dry acrylonitrile copolymer resin. In most applications, the amount of amine will be from 0.1 to 2 parts by weight per hundred parts of resin. Other methods for combining the amine scavenger and the resin include steeping the resin in the presence of the amine, and injecting the amine scavenger into the molten resin during the melt processing or mixing operation. Melt processing, for the purposes of the invention, includes any of the conventional means for processing the acrylonitrile copolymer resins set forth above wherein the resin is converted to a melted state including mastication, milling, Banbury mixing, extrusion, injection moulding. The resin may of course be subjected to several such operations such as for example to a milling or similar compounding step followed by a thermoforming step such as an extrusion or injection molding operation. The scavenger amine compound may be introduced prior to any of such steps, however, the admixing will preferably be done prior to the initial compounding or melt mixing step.

The present invention also provides a composition comprising an acrylonitrile copolymer resin and from 0.01 to 10 parts by weight of, as aliphatic amine, at least one of ethanolamine, triethanolamine, 1,3-bis(aminomethyl)cyclohexane, diethylenetriamine, triethylenetetramine and tetraethylenepentamine per hundred parts of said resin.

The practice of the process of this invention will be better understood by consideration of the following Examples.

Examples 1—16

In the following examples, summarized in Table I, 1300 g portions of dry, powdered Cycolac® R 211 ABS resin (containing 565 ppm residual acrylonitrile monomer as received) were combined with 6.5 g magnesium stearate lubricant and compounded by fluxing at 120°C (250°F), then mixing at 180°C (350°F) for 30 sec. on a Banbury mixer. The indicated amount of scavenger was added to the bath in the mixer during the compounding operation. The bath was dropped, milled for 30 sec., and cut into strips. Residual non-aqueous volatiles (NAV) were determined by dissolving a 0.5 g sample of resin in 9.5 g of dimethylacetamide, then measuring the acrylonitrile monomer content of the solution by vapor phase chromatography. The results are summarized in Table I.

TABLE I

| Example No. | Amine[1] | Wt.[2] pphr | AN[3] PPM |
|---|---|---|---|
| 1 | None | 0 | 168 |
| 2 | EA | 0.05 | 143 |
| 3 | " | 0.1 | 133 |
| 4 | " | 0.5 | 53 |
| 5 | BAC | 0.05 | 139 |
| 6 | " | 0.1 | 158 |
| 7 | " | 0.5 | 83 |
| 8 | TEPA | 0.05 | 127 |
| 9 | " | 0.1 | 113 |
| 10 | " | 0.5 | 75 |
| 11 | DETA | 0.05 | 133 |
| 12 | " | 0.1 | 162 |
| 13 | " | 0.5 | 22 |
| 14 | TETA | 0.05 | 162 |
| 15 | " | 0.1 | 147 |
| 16 | " | 0.5 | 60 |

Notes:
[1] EA=ethanolamine;     BAC=1,3-bis(aminomethyl)cyclohexane;     TEPA=tetraethylenepentamine; DETA=diethylenetriamine; TETA=triethylenetetramine.
[2] wt of scavenger amine, parts per hundred resin.
[3] Acrylonitrile concentration in pellets after compounding, ppm, detn'd by VPC; see text.

# 0 119 771

Examples 17—21

As an alternative method for mixing the amine scavenger, 13.0 g of the selected amine were thoroughly mixed with 50 g of resin. The mixture was then added to 1250 g of resin in the Banbury mixer and compounded as before. The residual AN contents for each, determined as in Examples 1—16, are summarized in Table II.

TABLE II

| Example No. | Amine[1] | Wt[2] pphr | AN[3] PPM |
|---|---|---|---|
| 17 | DETA | 1.0 | <10 |
| 18 | EA | 1.0 | <10 |
| 19 | TETA | 1.0 | <10 |
| 20 | TETA | 1.0 | <10 |
| 21 | TEA | 1.0 | 37 |

Notes:
[1] see note 1, Table I; TEA=triethanolamine. 2,3 see notes 2 and 3, Table I.

It will be apparent from a comparison of Examples 2—21 with control Example 1 that reduction in residual acrylonitrile monomer content by as great as 90% and more can be accomplished by adding the amine scavenger to the resin during the melt mixing or compounding process.

It will be apparent to those skilled in the art that the resin compositions may further comprise conventional lubricants, stabilizers, pigments, dyes, fillers and as is commonly practiced in the compounding art.

## Claims

1. A process for reducing the residual acrylonitrile monomer content of an acrylonitrile copolymer resin which comprises adding to said resin, as aliphatic amine, at least one of ethanolamine, triethanolamine, 1,3-bis(aminomethyl)cyclohexane, diethylenetriamine, triethylenetetramine and tetraethylenepentamine and then melt-processing said resin.

2. A process according to Claim 1 wherein the amount of said amine is from 0.01 to 10 parts by weight per hundred parts by weight of said resin.

3. A composition comprising an acrylonitrile copolymer resin and from 0.01 to 10 parts by weight of, as aliphatic amine, at least one of ethanolamine, triethanolamine, 1,3-bis(aminomethyl)cyclohexane, diethylenetriamine, triethylenetetramine and tetraethylenepentamine per hundred parts of said resin.

## Patentansprüche

1. Verfahren zur Verringerung des Anteils zurückbleibender Acrylmonomere in einem Acrylnitrilharz, das darin besteht, dem Harz mindestens eines der aliphatischen Amine Ethanolamin, Triethanolamin, 1,3-bis(aminomethyl)cyclohexan, Diethylentriamin, Triethylentetramin und Tetraethylenpentamin zuzusetzen und dann den Harz in einem Schmelzverfahren zu bearbeiten.

2. Verfahren nach Anspruch 1, wonach der Amingehalt 0,01 bis 10 Gewichtsteile auf 100 Gewichtsteile des Harzes beträgt.

3. Zusammensetzung bestehend aus einem Acrylnitrilcopolymerharz und 0,01 bis 10 Gewichtsteilen mindestens eines der aliphatischen Amine Ethanolamin, Triethanolamin, 1,3-bis(aminomethyl)cyclohexan, Diethylentriamin, Triethylentetramin und Tetraethylenpentamin auf 100 Gewichtsteile des Harzes.

## Revendications

1. Procédé pour réduire la teneur en acrylonitrile résiduelle d'une résine de copolymère d'acrylonitrile qui comprend l'addition à cette résine, comme amine aliphatique d'au moins une des amines éthanolamine, triéthanolamine, 1,3-bis(aminométhyl)cyclohexane, diéthylènetriamine, triéthylènetétramine et tétraéthylènepentamine, puis le traitement à l'état fondu de cette résine.

2. Procédé selon la revendication 1, dans lequel la quantité de cette amine est de 0,01 à 10 parties en poids pour 100 parties en poids de cette résine.

3. Composition comprenant une résine de copolymère d'acrylonitrile et comme amine aliphatique 0,01

5

à 10 parties en poids d'au moins une des amines éthanolamine, triéthanolamine, 1,3-bis(aminométhyl)cyclohexane, diéthylènetriamine, triéthylènetétramine, et tétraéthylènepentamine pour 100 parties de cette résine.